# EUROPEAN PATENT SPECIFICATION

(11) **EP 3 919 743 B1**
(45) Date of publication and mention of the grant of the patent: **28.10.2026**
(21) Application number: 21177573.9
(22) Date of filing: 03.06.2021
(51) Int. Cl.: F04C 18/02, F04C 23/00, F04C 29/00, H02K 41/06

(54) **SCROLL PUMP**
SCROLLPUMPE
POMPE À SPIRALE

(30) Priority: 05.06.2020 GB 202008476
(43) Date of publication of application: 08.12.2021
(73) Proprietor: Edwards Limited, Burgess Hill, Sussex RH15 9TW (GB)
(72) Inventor: SCHOFIELD, Nigel Paul, Burgess Hill, RH15 9TW (GB)
(74) Representative: Totman, Clare Elizabeth

(56) References cited:
- EP-A2- 1 221 758
- DE-A1- 102013 020 763
- JP-A- 2000 045 967
- JP-A- 2000 303 970
- JP-A- 2002 330 579
- JP-A- H03 237 204
- US-A1- 2009 180 909
- US-A1- 2018 223 848

## Description

### Field

The present invention relates to a scroll pump, in particular to a vacuum scroll pump. The present invention also relates to a method of operating a scroll pump, and a method of calibrating a scroll pump.

### Background

Known scroll compressors, or pumps, comprise a fixed scroll, an orbiting scroll and a drive mechanism for the orbiting scroll. The drive mechanism is configured to impart an orbiting motion on the orbiting scroll, whose movement relative to fixed scroll moves fluid through the pump from a pump inlet to a pump outlet. The fixed and orbiting scrolls each comprise a scroll wall extending from a generally circular base plate. Each scroll wall has an end, or tip, face disposed remote from and extending substantially parallel to the respective base plate. The orbiting scroll wall is configured to mesh with the fixed scroll wall during orbiting of the orbiting scroll so that the relative motion of the scrolls causes successive volumes of fluid to be enclosed in pockets defined between the scroll walls and pumped from the inlet to the outlet.

Generally, a radial clearance is provided between the orbiting scroll wall and fixed scroll wall to reduce the likelihood of the orbiting scroll wall and fixed scroll wall becoming locked or jammed, resulting machine down-time and component damage. However, excessive radial clearance is to be avoided because it may facilitate fluid leakage between the scroll walls in an upstream (i.e. towards the pump inlet) direction, reducing pump performance.

The tip face of the orbiting scroll often comprises a tip seal which engages and provides a seal with the base plate of the fixed scroll. Similarly, the tip face of the fixed scroll may comprise a tip seal which engages and provides a seal with the base plate of the orbiting scroll. During use, the tip seals may wear, which may introduce particles into the pumped fluid and provide a path for fluid leakage, detrimentally affecting pump performance.

To diversify their breadth of application, there is an ongoing desire to miniaturise scroll pumps. However, it has been identified that, as the size and capacity of scroll pumps are reduced, the negative contribution of fluid leakage to pump performance is increased: impacting negatively on pumping efficiency and ultimate pressure.

The invention addresses, at least to an extent, these and other issues with known scroll pumps.

US2009/180909 describes a scroll pump having comprises a stator comprising a fixed scroll member having an end plate with a first spiral wrap extending therefrom; an orbital scroll member having an end plate with a second spiral wrap extending therefrom to intermesh with the first spiral wrap; a plurality of flexible supports each having one end connected to the orbital scroll member and another end connected to the stator to support the orbital scroll member relative to the stator, and a linear drive system for driving the orbital scroll member to orbit relative to the fixed scroll member.

JP2002-330579 describes a revolving actuator with a plurality of stators arranged about the periphery of the revolving-orbit surface of a moving-element member. An electromagnet is formed by winding a coil on each stator which generates magnetic field in the revolving-axis direction.

JP2000-045967 describes a scroll pump in which a magnetic circuit is formed such that a housing which retains the movable scroll becomes a stator and the movable scroll becomes a rotor for direct driving of the moveable scroll

EP1221758 describes a revolution-type actuator having a movable member performing a revolution motion with respect to a fixed member, a plurality of conducting paths which are provided on a face parallel to a trajectory face of the revolution motion and through which currents flow in mutually intersecting directions, a power supply which passes currents having different phases through the plurality of conducting paths, and a magnetic field generator which forms a magnetic field perpendicular to the conducting paths, and in which the movable member revolves due to an electromagnetic force generated by an interaction between a current flowing through the conducting paths and a magnetic field generated by the magnetic field generator.

### Summary

Accordingly, in a first aspect, the present invention provides a scroll pump according to claim 1.

The scroll pump comprises an orbiting scroll and a fixed scroll.

The scroll pump further comprises a magnetic drive system.

The magnetic drive system comprises a static magnetic component and an orbiting drive component. In use, the static magnetic component imparts an orbiting motion to the orbiting drive component such that the orbiting drive component orbits substantially about an orbital axis. The orbiting drive component is coupled to the orbiting scroll such that, in use, the orbiting scroll orbits about an orbital axis. The orbiting scroll and the orbiting drive component may be collectively referred to as the orbiting system. The orbital axis of the orbiting system and orbiting scroll preferably being substantially coaxial. As will be appreciated, typically, the orbiting scroll shall not rotate.

The scroll pump may further comprise a scroll pump housing. A pump inlet may be located in the scroll pump housing such that, in use, fluid may enter the scroll pump through said pump inlet. Within said scroll pump housing there may be a pump chamber. Preferably, the pump chamber may be substantially defined by the orbiting scroll and the fixed scroll.

A non-return valve may be arranged between the pump inlet and the pump chamber, which non-return valve may be configured to substantially prevent fluid from exiting the pump through the pump inlet.

A pump outlet may be located through the scroll pump housing such that, in use, fluid may exit the scroll pump through said pump outlet. Preferably, the pump inlet, pump chamber, and pump outlet may be fluidly connected in series.

Typically, the fluid may be a gas, for instance as air.

Preferably, the scroll pump is a dry scroll pump. The scroll pump may have a capacity of less than about 1 m³h⁻¹.

The static magnetic component may comprise one or more electromagnet(s), preferably two or more electromagnet(s). For example, the static magnetic component may comprise from about 1 to about 8 electromagnets, preferably 3 electromagnets.

Preferably, in embodiments wherein the static magnetic component comprises more than one electromagnet, the electromagnets may be located on a plane tangential to the orbital axis of the orbiting scroll. Additionally, or alternatively, the electromagnet substantially uniformly spaced about the circumference of an imaginary circle centred about the orbital axis of the orbiting scroll. In embodiments, the imaginary circle is in a plane that passes through the pump chamber.

Each electromagnet may comprise a coiled wire. Typically, the wire is coiled around a core made from a ferromagnetic or ferrimagnetic material, such as iron or an alloy thereof.

Typically, the orbiting drive component may comprise at least one permanent magnet, ferromagnetic material, and/or ferrimagnetic material. Preferably, the orbiting drive component comprises a permanent magnet or a soft iron.

The orbiting drive component may comprise one or more orbiting drive component elements, preferably two or more orbiting drive component elements. Preferably the one or more orbiting drive component elements may be substantially uniformly spaced about the circumference of an imaginary circle substantially tangential to and substantially centred about the orbital axis of the orbiting scroll.

In some embodiments the orbiting drive component may be mounted on a drive shaft to which the orbiting scroll is attached. In alternative embodiments, the orbiting drive component may be coupled directly to the orbiting scroll. For example, the orbiting drive component may be mounted to the radially outermost surface of the orbiting scroll. When the orbiting drive component comprises a plurality of orbiting drive elements, they may be substantially uniformly spaced about the circumference of the radially outermost surface of the orbiting scroll.

The static magnetic component may be configured to produce a magnetic field when in use. The magnetic field may be variable. The magnetic field strength may be changed by controlling the power input to the static magnetic component. Preferably, when the static magnetic component comprises a plurality of electromagnets, the magnetic field may be varied by controlling the power input to each electromagnet individually. Alternatively, the orbiting drive component may be configured to produce a variable magnetic field when in use.

In a particularly preferred embodiment, the static magnetic component may comprise three electromagnets. The static magnetic component may be powered by a three-phase drive.

Typically, the variable magnetic field may be controlled in use to provide a sealing engagement between the orbiting scroll and the fixed scroll. In other words, the sealing engagement between the orbiting scroll and the fixed scroll may be provided, or controlled, by way of the variable magnetic field. Advantageously, the control of the variable magnetic field may allow for the orbiting scroll and fixed scroll to be brought into a sealing engagement without the use of mechanical biasing or control means.

Typically, the orbiting drive component is arranged within the variable magnetic field. In use, the variable magnetic field may influence the position of the orbiting drive component to impart motion to the orbiting drive component. Preferably, the variable magnetic field may be controlled such that the motion of the orbiting drive component may be an orbiting motion. Preferably the orbiting motion of the orbiting drive component may comprise substantially no rotation of the orbiting drive component. Preferably, the orbiting motion of the orbiting drive component may be in an orbital plane. The orbital plane being an imaginary plane defined by the orbital motion of the orbiting drive component. The orbit of the centroid of the orbiting drive component and/or the orbiting drive elements being located substantially on the orbital plane. The orbital axis of the orbiting drive component and/or element(s) may be substantially parallel to the orbital axis of the orbiting scroll.

Advantageously providing engagement between the orbiting scroll and fixed scroll may ensure that fluid leakage is minimised. The variable magnetic field may be controlled to provide sufficient sealing force between the orbiting scroll and the fixed scroll, whilst ensuring that the orbiting scroll and fixed scroll do not engage with such a force as to cause excessive wearing or locking of the components.

Beneficially, the dynamic positional control of the orbiting scroll achievable by the magnetic drive system may reduce wear, thus improving the lifespan of the scroll pump. Furthermore, the orbiting motion of the orbiting scroll may be adjusted to ensure minimal fluid leakage between the orbiting scroll and fixed scroll during use.

Advantageously a magnetic drive system may require fewer bearings within the system compare to scroll pumps typical of the prior art. Preferably, the scroll pump of the present invention is bearing free.

The orbiting scroll comprises an orbiting scroll wall having at least one side face. The fixed scroll comprises a fixed scroll wall having at least one side face. A side face of the orbiting scroll wall and a side face of the fixed scroll wall are substantially parallel. A side face of the orbiting scroll wall and/or a side face of the fixed scroll wall comprises a polymeric material. In use, a side face of the orbiting scroll wall engages a side face of the fixed scroll wall.

Typically, the orbiting scroll wall may define a spiral along its length, preferably the spiral may extend from a radially outermost point of the orbiting scroll wall towards a central axis. Preferably, the orbiting scroll wall may define an Archimedean spiral along its length. The orbiting scroll wall may define a spiral along its length from a radially outermost point towards a central axis in a substantially clockwise or a substantially anticlockwise direction.

Preferably, the orbiting scroll wall may extend substantially linearly in an axial direction. The extent by which it extends defining an axial height. The orbiting scroll wall may have an axial height of from about 20 mm to about 70 mm. Preferably, the axial height of the orbiting scroll wall may be substantially constant along its length.

The orbiting scroll wall may be defined by two side faces, a radially inwardly facing side face and a radially outwardly facing side face. Preferably, the radially inwardly facing side face and the radially outwardly facing side face are substantially parallel.

The orbiting scroll may further comprise an orbiting base plate. Typically, the orbiting scroll wall extends from the orbiting base plate. Preferably, the orbiting scroll wall may extend substantially perpendicularly from the orbiting base plate. Typically, the orbiting base plate may be substantially disc-shaped or substantially annular. Preferably, the orbiting scroll wall and orbiting base plate may be integrally formed, preferably as a single, unitary component.

In embodiments, the orbiting base plate may be coupled to a shaft. Preferably, the shaft may be substantially perpendicular to the orbiting base plate. More preferably, the shaft may be coupled to the orbiting base plate substantially at a centroid of the orbiting base plate. In some embodiments, the shaft may be a drive shaft, configured to, in use, transmit orbiting motion from the orbiting drive component to the orbiting scroll.

Typically, the orbiting scroll wall may have a tip face. Preferably, the tip face may be substantially parallel to the orbiting base plate. Preferably, the tip face may be at a distal end of the orbiting scroll wall from the orbiting base plate. Preferably, the orbiting scroll wall may be defined by a pair of side faces and a tip face.

Typically, the tip face may be substantially planar, or alternatively the tip face may be contoured. Preferably, the interface between the tip face and a side face may be substantially rounded or chamfered.

Typically, the fixed scroll wall may define a spiral along its length, preferably the spiral may extend from a radially outermost point towards a central axis. Preferably, the fixed scroll wall may define an Archimedean spiral along its length. The fixed scroll wall may define a spiral along its length from a radially outermost point towards a central axis in a substantially clockwise or a substantially anticlockwise direction, wherein the direction is different to that of the orbiting scroll wall.

Typically, the fixed scroll wall may extend from substantially linearly in an axial direction. The extent by which it extends defining an axial height. The fixed scroll wall may have an axial height of from about 20 mm to about 70 mm. Preferably, the axial height of the fixed scroll wall may be substantially constant along its length.

The fixed scroll wall may be defined by two side faces, a radially inwardly facing side face and a radially outwardly facing side face. Preferably, the radially inwardly facing side face and the radially outwardly facing side face may be substantially parallel.

The fixed scroll may further comprise a fixed base plate. Typically, the fixed scroll wall may extend from a fixed base plate. Preferably, the fixed scroll may extend substantially perpendicularly from the fixed base plate. Typically, the fixed base plate may be substantially disc-shaped or substantially annular. Preferably, the fixed scroll wall and fixed base plate may be integrally formed, preferably a single, unitary component.

Typically, the fixed base plate may be coupled to the scroll pump housing.

Typically, the fixed scroll wall may have a tip face. Preferably, the tip face may be substantially parallel to the fixed base plate. Preferably, the tip face may be at a distal end of the orbiting scroll wall from the fixed base plate. Preferably, the fixed scroll wall may be defined by a pair of side faces and a tip face.

Preferably, the tip face may be substantially planar, or may be contoured. Preferably, the interface between the tip face and a side face may be substantially rounded or chamfered.

In use, the orbiting scroll and the fixed scroll may be arranged in a face-to-face configuration. Preferably, the orbiting scroll and the fixed scroll may be arranged such that the orbiting scroll wall and fixed scroll wall interleaf. Preferably, in use, the radially inwardly facing side face and/or the radially outwardly facing side face of the fixed scroll wall may be substantially parallel with the radially inwardly facing side face and/or the radially outwardly facing side face of the orbiting scroll wall.

A side face of the orbiting scroll wall and/or a side face of the fixed scroll wall may comprise a polymeric material. Preferably, all side faces of the orbiting scroll wall and/or all side faces of the fixed scroll wall may comprise a polymeric material. For example, the radially inwardly facing side face and the radially outwardly facing side face of the orbiting scroll wall comprise said polymeric material.

Preferably the orbiting scroll wall and/or the fixed scroll wall may comprise a polymeric material, more preferably consist essentially of polymeric material, more preferably consist of a polymeric material. Still more preferably, the orbiting scroll and/or the fixed scroll may comprise a polymeric material, more preferably consist essentially of polymeric material, more preferably consist of a polymeric material.

Typically, the orbiting scroll may comprise, preferably consist of, a single unitary polymeric structure.

Advantageously, if the orbiting scroll and/or orbiting scroll wall comprises a polymeric material, this may reduce the mass of the orbiting components of the scroll pump. Therefore, the power input required to induce the orbiting motion of the orbiting scroll may be reduced.

The polymeric material may be selected from a group comprising elastomers, thermoplastic materials or thermosets. Thermoplastic materials are preferred and particularly those classified as high-performance thermoplastic materials as a result of their mechanical and thermal properties. Preferred thermoplastics are selected from the group consisting of liquid crystal polymers, including aromatic polyamides and aromatic polyesters, polyimides, polyamides, polyethylenimines, and polyether ether ketone (PEEK), or derivatives or copolymers thereof.

Self-lubricating polymers are particularly preferred.

The polymeric material may additionally include one or more from the group consisting antistatics, antioxidants, mould release agents, flameproofing agents, lubricants, colorants, flow enhancers, fillers, including nanofillers, light stabilizers and ultraviolet light absorbers, pigments, anti-weathering agents and plasticisers.

Suitable lubricant additives may include a fluoropolymer, such as polytetrafluoroethylene (PTFE). Preferably, the polymeric material is selected from the group consisting of PEEK with PTFE, and a polyimide with PTFE additive.

In use, the orbiting motion of the orbiting scroll may comprise translation of the orbiting scroll about the orbital axis. The orbiting motion may be substantially in an orbital plane. The orbital plane may be substantially perpendicular to the orbital axis.

Preferably, the centroid of the orbiting scroll may remain substantially radially equidistant from the orbital axis throughout its orbit. The skilled person will appreciate that when pumping is being initiated and/or ceased, and/or if the power input to the static magnetic component is increased or decreased, the radial distance of the centroid of the orbiting scroll from the orbital axis may vary. Equally, in embodiments the radial distance may be varied deliberately to increase or decrease the separation and/or engagement force between orbiting and static scroll wall side faces.

When in use, a side face of the orbiting scroll wall may engage a side face of the fixed scroll wall. Preferably, an engagement between a side face of the orbiting scroll wall and a side face of the fixed scroll wall may be defined by engagement along substantially the entire height of a side face of the orbiting scroll wall and/or a side face of the fixed scroll wall. Preferably, there may be a plurality of such engagements between a side face of the orbiting scroll wall and a side face of the fixed scroll wall along the length of the orbiting scroll wall. More preferably, the plurality of engagements may be spaced along the length of the orbiting scroll wall such that the plurality of engagements are substantially diametrically aligned in relation to the orbital axis.

In use, a side face of the orbiting scroll wall may be slidably engaged with a side face of the fixed scroll wall.

Advantageously, the engagement of a side face of the orbiting scroll wall with a side face of the fixed scroll wall during use of the scroll pump may enable the orbiting scroll wall to be in sliding contact with the fixed scroll wall. This may provide excellent sealing between the orbiting scroll wall and the fixed scroll wall and may reduce fluid flow in an upstream direction of the pump (i.e. towards a pump inlet). For smaller scroll pumps, the importance of achieving a seal between the orbiting scroll wall and fixed scroll wall during use may be heightened, as fluid leakage accounts for more of the overall fluid flow through such pumps. Therefore, this feature may beneficially enable efficient pumping with small scroll pumps.

Typically, when pumping, a side face of the orbiting scroll wall may substantially continually engage a side face of the fixed scroll wall.

In use, a side face of the orbiting scroll wall is substantially continually slidably engaged with a side face of the fixed scroll wall. The static magnetic component imparts an orbiting motion to the orbiting drive component such that the side face of the orbiting scroll wall is substantially continually slidably engaged with a side face of the fixed scroll wall. Beneficially, in this way the orbiting scroll wall can optionally be brought into continuous sliding engagement with the fixed scroll wall without the use of mechanical biasing or control means.

Advantageously, such continual engagement may maintain a seal between a side face of the orbiting scroll wall and a side face of the fixed scroll wall during use. Preferably, when pumping, there may be a plurality of continual engagements between a side face of the orbiting scroll wall and a side face of the fixed scroll wall.

Advantageously, engagement of a side wall of the orbiting scroll wall with a side face of the fixed scroll wall during use may negate the requirement for a tip seal as is found in conventional scroll pumps.

Typically, the pump chamber of the scroll pump is defined by the orbiting scroll and the fixed scroll.

In embodiments, the centre of mass of an orbiting system comprising the orbiting scroll and the orbiting drive component is located on an imaginary plane substantially coincident with the orbital plane of the orbiting drive component.

Advantageously, such an arrangement may reduce any tendency of the orbiting scroll to wobble during orbiting motion. Wobbling of the orbiting scroll may be defined by off-axis movement of the orbiting scroll. Such wobbling may be caused by the centre of mass being offset from the orbiting plane of the orbiting drive component. Wobbling may reduce the overall pump efficiency and/or require a further component to dampen the wobble.

In some embodiments, the orbiting drive component may be arranged such that, in use, the orbital plane of the orbiting drive component may pass substantially through the pump chamber, preferably through the orbiting scroll. Preferably, in such embodiments, the orbiting drive component may be mounted to the orbiting scroll.

Preferably, the centre of mass of the orbiting scroll and the orbiting drive component, both respectively and combined, may be positioned substantially within the pump chamber during use. The centre of mass of the orbiting scroll and the orbiting drive component may be positioned substantially within the orbital plane of the orbiting drive component.

Alternatively, the orbiting drive component may be arranged such that, in use, the orbital plane of the orbiting drive component may be positioned substantially outside of the pump chamber. In such an embodiment, the orbiting drive component may be mounted onto a drive shaft that may be attached to the orbiting scroll. The drive shaft may extend from within the pump chamber, where it is coupled to the orbiting scroll, to a region outside of the pump chamber. Preferably, the centre of mass of the orbiting scroll and the orbiting drive component may be positioned substantially within the orbital plane of the orbiting drive component.

In a preferred embodiment of the scroll pump, a side face of the orbiting scroll wall or a side face of the fixed scroll wall may comprise a polymeric material. Additionally, a side face of the other of the orbiting scroll wall or a side face of the fixed scroll wall may comprise a metallic material, for example aluminium or an aluminium alloy. Preferably, the metallic material comprises an anodised metallic material, for example anodised aluminium. More preferably, a side face of the orbiting scroll wall may comprise a polymeric material, for example PEEK or a polyimide, preferably lubricated with PTFE, and a side face of the fixed scroll wall may comprise a metallic material, for example an anodised metallic material.

Advantageously, if either the orbiting scroll or fixed scroll comprises a polymeric material, and the other of the orbiting scroll or fixed scroll comprises a metallic material, when a side wall of the orbiting scroll wall engages with a side wall of the fixed scroll wall during use, the coefficient of friction between the components may be reduced and wear of the components is reduced.

Typically, in use, a tip face of the orbiting scroll wall may engage a base plate of the fixed scroll wall. Preferably, the tip face of the orbiting scroll wall may engage the base plate of the fixed scroll wall substantially along the entire length of the tip face of the orbiting scroll wall.

Additionally, or alternatively, a tip face of the fixed scroll wall may engage a base plate of the orbiting scroll wall. Preferably, the tip face of the fixed scroll wall may engage the base plate of the orbiting scroll wall substantially along the entire length of the tip face of the fixed scroll wall.

The tip face may or may not include a separate tip seal on either the orbiting scroll wall and/or fixed scroll wall.

Typically, a tip face of the orbiting scroll wall and/or a tip face of the fixed scroll wall and/or a base plate of the orbiting scroll wall and/or a base plate of the fixed scroll wall comprises a polymeric material, preferably wherein the polymeric material comprises PEEK or a polyimide, preferably lubricated with PTFE. Preferably, a tip face of the orbiting scroll wall and the base plate of the orbiting scroll wall may comprise a polymeric material.

Preferably, a tip face of the fixed scroll wall and a base plate of the fixed scroll wall may comprise a metallic material, for example aluminium. Preferably, the metallic material may be an anodised metallic material, for example anodised aluminium.

Typically, the scroll pump may further comprise means for biasing the orbiting scroll and the fixed scroll together, preferably means for biasing the orbiting scroll towards the fixed scroll. In use, as the orbiting scroll orbits in an orbiting motion about the orbital axis, pressure within the pump chamber may exert a substantially axial force on the orbiting scroll, away from the fixed scroll. The orbiting scroll wall may be prevented from moving in an axial direction by the means for biasing the orbiting scroll towards the fixed scroll.

Advantageously, restricting movement of the orbiting scroll and/or fixed scroll in a direction away from the other scroll may ensure that the tip surface of the orbiting scroll wall remains engaged with the base plate of the fixed scroll wall, and/or the tip surface of the fixed scroll wall remains engaged with the base plate of the orbiting scroll wall. This may provide a seal between the components and may reduce fluid leakage during pumping. Beneficially, this may increase overall pumping efficiency.

Preferably, comprise means for biasing the orbiting scroll and the fixed scroll together, preferably means for biasing the orbiting scroll towards the fixed scroll, may comprise at least one resilient bias, such as a spring and/or at least one magnet.

In a further aspect, the present invention provides a method of calibrating a scroll pump according to claim 12. The method comprises the steps of providing a scroll pump, imparting an orbiting motion to the orbiting scroll about an orbital axis using a magnetic drive system and varying the orbit of the orbiting scroll while orbiting until a side face of the orbiting scroll wall engages a side face of the fixed scroll wall. Typically, initially, such as when stationary, the orbiting scroll wall is disengaged from the side face of the fixed scroll wall. Typically, the orbit is increased until engagement.

The scroll pump provided in the method comprises an orbiting scroll and a fixed scroll, the orbiting scroll comprising an orbiting scroll wall having at least one side face and the fixed scroll comprising a fixed scroll wall having at least one side face, wherein at least one side face of the orbiting scroll wall is substantially parallel to at least one side face of the fixed scroll wall. , A side face of the orbiting scroll wall and/or a side face of the fixed scroll wall comprises a polymeric material. The scroll pump further comprises a magnetic drive system.

Advantageously, the method may enable the orbit of the orbiting scroll to be changed whilst the orbiting scroll is in its orbiting motion, via the magnetic drive system. This may enable the orbit to be varied so that a side face of the orbiting scroll wall engages a side face of the fixed scroll wall. Beneficially, this may reduce fluid leakage whilst pumping, which may allow for more efficient pumping. This may be particularly beneficial for scroll pumps with a capacity of less than about 1 m³h⁻¹, where fluid leakage may be proportionally more detrimental to overall pump performance compared to a higher capacity scroll pump. However, the method may also increase pumping efficiency in larger scroll pumps.

The method further comprises the step of varying the orbit of the orbiting scroll such that, while pumping, a side face of the orbiting scroll wall continually engages a side face of the fixed scroll wall.

Typically, the scroll pump provided may further comprise biasing means for biasing the orbiting scroll towards the fixed scroll.

Additionally, the orbiting scroll wall may further comprise a base plate and a tip face. The fixed scroll wall may further comprise a base plate and a tip face.

The method may further comprise the step of operating the biasing means such that the tip face of the orbiting scroll wall engages the base plate of the fixed scroll wall.

Additionally, or alternatively, the method may further comprise the step of operating the biasing means such that the tip face of the fixed scroll wall engages the base plate of the orbiting scroll wall. Preferably, the operation of the biasing means may be such that the tip face of the fixed scroll wall may continually engage the base plate of the orbiting scroll wall.

It will be understood that features of different aspects and/or embodiments described herein may be combined, and still fall within the scope of the present invention.

### Brief Description of Figures

Preferred features of the present invention will now be described, by way of example, with reference to accompanying drawings, in which:
Figure 1 shows a cross-section view of a scroll pump according to the prior art.
Figure 2 shows a schematic of a scroll pump according to an embodiment of the present invention.
Figure 3 shows a schematic of a scroll pump according to a further embodiment of the present invention.

### Detailed Description

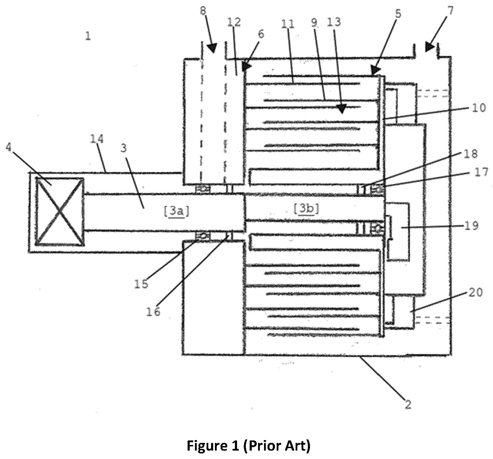

Figure 1 shows a scroll pump, or compressor, (1) according to the prior art. The scroll pump (1) comprises a pump housing (2), and a drive shaft (3). In use, the drive shaft (3) is rotatably driven by a motor (4).

The motor (4) comprises an electric motor. The motor is coupled to the drive shaft (3). The motor (4) is configured such that, in use, it rotates the drive shaft (3) at speeds of up to about 3000 RPM.

The drive shaft (3) comprises two or more portions. A first portion (3a) has a central axis that is substantially coaxial with the axis of rotation of the drive shaft (3). A second portion (3b) has a central axis that is substantially eccentric from, yet substantially parallel to, the axis of rotation of the drive shaft (3). Preferably, the central axis of the first portion (3a) and the central axis of the second portion (3b) may be substantially parallel. Preferably, the first portion (3a) and second portion (3b) may be integrally formed as a single unitary component.

The drive shaft (3) is coupled to an orbiting scroll (5). Preferably, the drive shaft (3) may be coupled to the orbiting scroll (5) such that, in use, rotation of the shaft (3) imparts an orbiting motion to the orbiting scroll (5), relative to a fixed scroll (6).

Typically, the second portion (3b) of the drive shaft (3) is coupled to the orbiting scroll (5). Preferably, the rotation of the second portion (3b) imparts said orbiting motion to the orbiting scroll (5). The transformation of rotational movement of the drive shaft (3) to orbital movement of the orbiting scroll is substantially achieved by the central axis of the second portion (3b) being substantially eccentric from the axis of rotation of the drive shaft (3).

In use, the orbital motion of the orbiting scroll (5) relative to the fixed scroll (6) pumps fluid along a flow path between a pump inlet (7) and a pump outlet (8). Preferably, the fluid is a gas.

The orbiting scroll (5) comprises an orbiting scroll wall (9). The orbiting scroll wall (9) extends from an orbiting base plate (10). Preferably, the orbiting scroll wall (9) may extend in a direction substantially parallel to the orbital axis of the orbiting scroll (5).

Similarly, the fixed scroll (6) comprises a fixed scroll wall (11). The fixed scroll wall (11) extends from a fixed base plate (12). Preferably, the fixed scroll wall (11) may extend in a direction substantially parallel to the central axis of the fixed scroll (6).

A pump chamber (13) is defined by the orbiting scroll (5) and the fixed scroll (6). The pump chamber (13) may be arranged between, and fluidly connected to, the pump inlet (7) and the pump outlet (8). In use, a first fluid pressure may be exhibited within the pump chamber (13). Typically, said first fluid pressure may be less than atmospheric pressure (1.013 bar), preferably a high vacuum, most preferably having a pressure of less than about 0.1 mbar.

A first bearing (15) supports the drive shaft (3) for rotation relative to the fixed scroll (6). Preferably, the first bearing (15) may be coupled to the first portion (3a) of the drive shaft (3). More preferably, an inner race of the first bearing (15) may be coupled to the first portion (3a) of the drive shaft (3).

The first bearing (15) may be coupled to the housing (2), or as shown, to the fixed scroll (6). Preferably, an outer race of the first bearing (15) may be coupled to the housing (2) or fixed scroll (6).

A first shaft seal (16) is located between the drive shaft (3) and the fixed scroll (6). Typically, the first shaft seal (16) may extend substantially radially outwardly from the drive shaft (3) to the fixed scroll (6). The first shaft seal (16) may prevent fluid, typically gas, ingress and egress from the pump chamber (13).

A second bearing (17) operatively connects the drive shaft (3) to the orbiting scroll (5). Typically, the second bearing (17) may be coupled to the second portion (3b) of the drive shaft (3). More typically, an inner race of the second bearing (17) may be coupled to the second portion (3b) of the drive shaft (3). The second bearing (17) enables the drive shaft (3), particularly the second portion (3b) of the drive shaft (3), to rotate relative to the orbiting scroll (5). Thereby the orbital motion of the orbiting scroll (5) in relation to the rotation of the drive shaft (3) is enabled.

A second shaft seal (18) is located between the orbiting scroll (5) and the drive shaft (3). Typically, the second shaft seal (18) may extend substantially radially outwardly from the drive shaft (3) to the orbiting scroll (5). The second shaft seal may prevent fluid leakage from the pump chamber (13).

Typically, a counterweight (19) may rotationally balance the weight of the orbiting components of the pump, including the orbiting scroll (5) and second portion (3b) of the drive shaft.

An anti-rotation device, or "frog", (20) may connect the orbiting scroll (5) to the pump housing (2). The anti-rotation device (20) may prevent rotation of the orbiting scroll (5), whilst allowing orbiting motion of the orbiting scroll (5). The anti-rotation device (20) may be substantially lubricant free. In this example, the anti-rotation device (20) may be made from a polymeric material, and may be a one-piece polymer component.

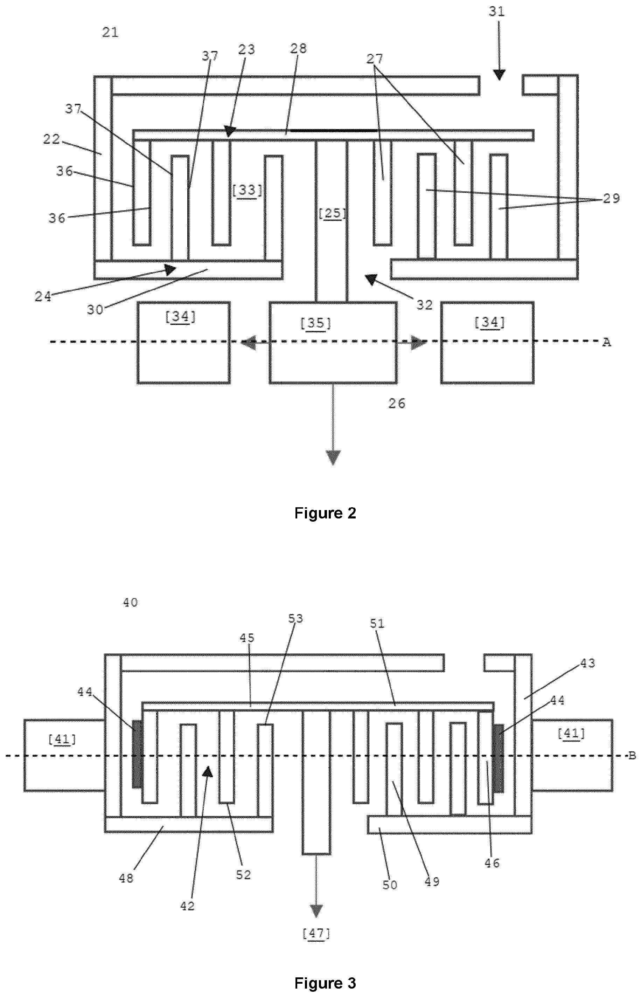

Figure 2 illustrates a cross-sectional view of a scroll pump (21) in accordance with an embodiment of the present invention.

The illustrated scroll pump (21) comprises a scroll pump housing (22). The scroll pump (21) further comprise an orbiting scroll (23) and a fixed scroll (24).

It will be appreciated that when the pump is not in use the orbiting scroll, and equally the orbiting drive component, may be stationary.

The scroll pump (21) further comprises a drive shaft (25). The drive shaft (25) is operatively connected at a first end to the orbiting scroll (23).

The orbiting scroll (23) comprises an orbiting scroll wall (27). The orbiting scroll further comprises an orbiting base plate (28). The orbiting scroll wall (27) extends from the orbiting base plate (28). In the illustrated embodiment the orbiting scroll wall (27) extends from the orbiting base plate (28) substantially parallel to the rotational axis of the drive shaft (25).

The orbiting scroll wall (27) and orbiting base plate (28) are integrally formed as a single, unitary component. Preferably, the orbiting scroll wall (27) and/or the orbiting base plate (28) may comprise a polymeric material, for example PEEK or a polyimide, either preferably being lubricated with PTFE.

As illustrated, typically, the drive shaft (25) is coupled to the orbiting base plate (28) substantially at the centroid of the orbiting base plate (28).

The illustrated fixed scroll (24) comprises a fixed scroll wall (29) extending from a fixed base plate (30). The fixed scroll wall extends substantially parallel to the orbiting scroll wall (27).

The fixed base plate (30) is substantially annular, preferably wherein an outermost radial periphery is fixedly attached to the scroll pump housing (22). A central aperture of the fixed base plate (30) may be at a radially innermost periphery of the fixed base plate (30). In use, the drive shaft (25) may substantially extend through the central aperture of the fixed base plate (30).

The illustrated scroll pump (21) further comprises a pump inlet (31) and a pump outlet (32). A pump chamber (33) is defined by the orbiting scroll (23) and the fixed scroll (24). The pump inlet (31), pump chamber (33), and pump outlet (32) are fluidly connected.

The scroll pump (21) further comprises a magnetic drive system (26). The magnetic drive system (26) comprises a static magnetic component (34). The static magnetic component (34) may comprise an arrangement of one or more electromagnets, preferably two or more electromagnets, more preferably three electromagnets. The static magnetic component (34) are typically uniformly space about an imaginary circle with the orbital axis of the orbiting scroll at its centre. The static magnetic component of the magnetic drive system typically comprises a multi-phase drive, such as a three-phase drive.

The magnetic drive system (26) further comprises an orbiting drive component (35). In the illustrated embodiment, the orbiting drive component (35) is operatively connected to the drive shaft (25) at an end thereof. The orbiting drive component (35) may be directly coupled to the drive shaft (25) by permanent, semi-permanent or reversible attachment means, such as an adhesive, screw or clip. Alternatively, the orbiting drive component (35) and drive shaft (25) may be integrally formed, e.g. as a single, unitary component.

Preferably, the orbiting drive component (35) may comprise a magnet, a ferromagnetic material, a ferrimagnetic material, for example soft iron.

The orbiting scroll wall (27) has an orbiting scroll side face (36). The fixed scroll wall (29) has a fixed scroll side face (37). They are substantially parallel.

The at least one orbiting scroll side face (36) and/or the at least one fixed scroll side face (37) comprise a polymeric material. Preferably, the polymeric material may comprise PEEK or polyimide, optionally with a PTFE lubricant. The at least one orbiting scroll side face (36) and/or the at least one fixed scroll side face (37) may comprise a coating of said polymeric material.

Additionally, the at least one orbiting scroll side face (36) and/or the at least one fixed scroll side face (37), may comprise a metallic material. Preferably, the metallic material may comprise aluminium alloy. More preferably, the metallic material may have an anodised coating. Anodised aluminium alloy is particularly preferred.

In a preferred arrangement, the at least one orbiting scroll side face (36) may comprise PEEK with PTFE additive, and the at least one fixed scroll side face (37) may comprise an anodised metallic material.

In use, the static magnetic component (34) imparts an orbiting motion to the orbiting drive component (35), such that the orbiting drive component (35) substantially orbits about an orbital axis. Preferably, the static magnetic component (34) may impart said orbiting motion by way of a variable magnetic field. The static magnetic component (34) comprise three electromagnets powered by a three-phase drive. As illustrated, the orbiting drive component (35) may be arranged substantially within the static magnetic component (34).

The orbiting drive component is operatively connected to the orbiting scroll (23) by the drive shaft (25). In use, as the orbiting drive component (35) orbits about the orbital axis, the drive shaft (25) and orbiting scroll (23) orbit about said orbital axis. Preferably, the orbiting scroll (23) may orbit about the orbiting axis at a substantially constant radius.

As the orbiting scroll (23) orbits in a substantially orbiting motion about the orbital axis, an orbital scroll side face (36) engages a fixed scroll side face (37). An orbital scroll side face (36) continually slidably engages a fixed scroll side face (37).

As the orbiting scroll (23) orbits in a substantially orbiting motion about the orbital axis, the one or more contact areas of the orbiting scroll side face (36) and fixed scroll side face (37) move along the orbiting scroll side face (36) and fixed scroll side face (37) in a downstream direction, i.e. towards the pump outlet (32). Fluid is thus driven by the orbital motion of the orbiting scroll (23) through the pump chamber (33) to the pump outlet (32).

Advantageously, the orbiting scroll side face (36) and/or fixed scroll side face (37) comprising a polymeric material enables the orbiting scroll side face (36) and fixed scroll side face (37) to engage during orbiting motion of the orbiting scroll (23). This may reduce wear of the components.

During use, compression of fluid between the orbiting scroll (23) and the fixed scroll (24) may result in a force being exerted on the orbiting scroll (23) in a direction away from the fixed scroll (24) substantially parallel to the orbital axis of the orbiting scroll. In the illustrated pump this force is counteracted by the presence of a resilient bias (38) acting in the opposite direction. Preferably, said resilient bias (38) acts on the orbiting scroll (23) in a direction towards the fixed scroll (23). Preferably, said resilient bias (38) include a spring and/or a further magnet.

In use, the illustrated orbiting drive component (35) orbits without rotation in an orbiting motion substantially about the orbital axis in an orbital plane (A). In the embodiment of Figure 2, the orbital plane (A) is located outside of the pump chamber (33).

The scroll pump (21) may further comprise means (not shown) for retaining substantially parallel alignment of the drive shaft (25) with the orbital axis. Additionally, or alternatively, the centre of mass of the orbiting system may be located substantially within the orbiting plane (A). Each may beneficially minimise off-axis wobbling of the orbital scroll (23) during use. Such off-axis wobbling may be due to the centre of mass of the orbiting scroll (23), drive shaft (25) and orbiting drive component (35) being offset from the orbital plane (A).

Figure 3 illustrates a further embodiment of a scroll pump (40) in accordance with the present invention.

The scroll pump (40) may share many of the same features as the scroll pump (21) described above in Figure 2.

The scroll pump (40) of Figure 3 differs in that the static magnetic component (41) is arranged substantially about the pump chamber (42). The static magnetic component (41) may be mounted to the scroll pump housing (43).

The orbiting drive component (44) is mounted directly on the orbiting scroll (45).

The orbital plane (B) of the orbiting drive component (44) is an imaginary plane defined by the orbiting motion of the orbiting drive component (44). In the embodiment of Figure 3, the orbital plane (B) passes through the pump chamber (42). Preferably, the centre of mass of the orbiting components (e.g. orbiting drive component (44) and the orbiting scroll (45)) may be positioned within the orbital plane (B) of the orbiting drive component (44). Beneficially, this may minimise off-axis wobbling of the orbiting components when in use. Additionally, the arrangement of Figure 3 may minimise off-axis wobbling of the orbiting components without the requirement of an additional stabilising means.

To prevent movement of the orbiting scroll (45) in an axial direction, the scroll pump (40) further comprises a resilient bias (47). Said resilient bias (47) may comprise a spring and/or magnet. The resilient bias (47) may be controllable to adjust the axial displacement of the orbiting scroll (45).

The fixed scroll (48) comprises a fixed scroll wall (49) extending from a fixed base plate (50) substantially parallel to the orbital axis. The orbiting scroll (45) comprises an orbiting base plate (51) from which the orbiting scroll wall (46) extends.

The orbiting scroll wall (46) further comprises a tip face (52), wherein the tip face (52) is substantially parallel to the fixed base plate (50). Preferably, the orbiting scroll tip face (52) and/or the fixed base plate (50) may comprise a polymeric material, preferably PEEK or polyimide, with a PTFE lubricant additive. Additionally, or alternatively, the orbiting scroll tip face (52) or the fixed base plate (50) may comprise a metallic material, e.g. anodised aluminium.

Additionally, or alternatively, the fixed scroll wall (49) further comprises a tip face (53), substantially parallel to the orbiting base plate (51). Preferably, the fixed scroll tip face (53) and/or the orbiting base plate (51) may comprise a polymeric material, preferably PEEK or polyimide, with a PTFE lubricant additive. Additionally, or alternatively, the fixed scroll tip face (53) or the orbiting base plate (51) may comprise a metallic material, preferably an anodised aluminium alloy.

### Reference Key

- 1.: Scroll pump
- 2.: Pump housing
- 3.: Drive shaft
a. First portion
b. Second portion
- 4.: Motor
- 5.: Orbiting scroll
- 6.: Fixed scroll
- 7.: Pump inlet
- 8.: Pump outlet
- 9.: Orbiting scroll wall
- 10.: Orbiting base plate
- 11.: Fixed scroll wall
- 12.: Fixed base plate
- 13.: Pumping chamber
- 14.: Motor housing
- 15.: First bearing
- 16.: First shaft seal
- 17.: Second bearing
- 18.: Second shaft seal
- 19.: Counterweight
- 20.: Anti-rotation device
- 21.: Scroll pump
- 22.: Scroll pump housing
- 23.: Orbiting scroll
- 24.: Fixed scroll
- 25.: Drive shaft
- 26.: Magnetic drive system
- 27.: Orbiting scroll wall
- 28.: Orbiting base plate
- 29.: Fixed scroll wall
- 30.: Fixed base plate
- 31.: Pump inlet
- 32.: Pump outlet
- 33.: Pumping chamber
- 34.: Static magnetic component
- 35.: Orbiting drive component
- 36.: Orbiting scroll side face
- 37.: Fixed scroll side face
- 38.: Resilient Bias
- 39.: Spring and/or magnet
- 40.: Scroll pump
- 41.: Static magnetic component
- 42.: Pumping chamber
- 43.: Pump housing
- 44.: Orbiting drive component
- 45.: Orbiting scroll
- 46.: Orbiting scroll wall
- 47.: Resilient bias
- 48.: Fixed scroll
- 49.: Fixed scroll wall
- 50.: Fixed base plate
- 51.: Orbiting base plate
- 52.: Orbiting scroll tip face
- 53.: Fixed scroll tip face

## Claims

1. A scroll pump (21;40) comprising an orbiting scroll (23;45) and a fixed scroll (24;48);
wherein the scroll pump further comprises a magnetic drive system, the magnetic drive system comprising a static magnetic component (34;41) and an orbiting drive component (35;42); and
wherein, in use, the static magnetic component (34;41) imparts an orbiting motion to the orbiting drive component (35;42) such that the orbiting drive component (35;42) orbits substantially about an orbital axis; and
wherein the orbiting drive component (35;42) is coupled to the orbiting scroll (23;45) such that, in use, the orbiting scroll (23;45) orbits substantially about an orbital axis, wherein the orbiting scroll (23;45) comprises an orbiting scroll wall (27;46) having at least one side face (36), and the fixed scroll (24;48) comprises a fixed scroll wall (29;49) having at least one side face (37); and
wherein a side face (36) of the orbiting scroll wall (27;46) and a side face (37) of the fixed scroll wall (29;49) are substantially parallel; and
wherein, in use, the static magnetic component (34;41) imparts an orbiting motion to the orbiting drive component (35;42) such that the side face (36) of the orbiting scroll wall (27;46) is continually slidably engaged with the side face (37) of the fixed scroll wall (29;49); and
**characterised in that**
a side face (36) of the orbiting scroll wall (27;46) and/or a side face (37) of the fixed scroll wall (29;49) comprises a polymeric material.

2. The scroll pump according to claim 1 wherein the static magnetic component (34;41) or the orbiting drive component (35;42) is configured to produce a variable magnetic field when in use, wherein the variable magnetic field is controlled in use to provide a sealing engagement between the orbiting scroll (23;45) and the fixed scroll (24;48).

3. The scroll pump according to any preceding claim wherein the centre of mass of an orbiting system comprising the orbiting scroll (23) and the orbiting drive component (35) is located in the orbital plane of the orbiting drive component (35).

4. The scroll pump according to any preceding claim, wherein the scroll pump further comprises a pump chamber (42) defined by the orbiting scroll (45) and the fixed scroll (48), and
wherein, the orbiting drive component (42) is arranged such that, in use, an orbital plane of the orbiting drive component (42) passes through said pump chamber (42), wherein the centre of mass of the orbiting scroll (45) and the orbiting drive component (42) is optionally positioned substantially within the pump chamber (42), preferably substantially within the orbital plane of the orbiting drive component (44).

5. The scroll pump according to any preceding claim, wherein the orbiting drive component (44) is located on or forms a part of the orbiting scroll (45).

6. The scroll pump according to any of claims 1 to 3, wherein the scroll pump further comprises a pump chamber (33) defined by the orbiting scroll (23) and the fixed scroll (24), and
wherein, the orbiting drive component (35) is arranged such that, in use, the orbital plane of the orbiting drive component (35) does not pass through the pump chamber (33).

7. The scroll pump according to any preceding claim, wherein a side face (36) of the orbiting scroll wall (27) or a side face (37) of the fixed scroll wall (29) comprises a polymeric material, and wherein a side face of the other of the orbiting scroll wall or a side face of the fixed scroll wall comprises a metallic material.

8. The scroll pump according to any preceding claim,
wherein, in use, a tip face (52) of the orbiting scroll wall (46) engages a base plate (50) of the fixed scroll (48), and/or wherein a tip face (53) of the fixed scroll wall (49) engages a base plate (51) of the orbiting scroll (45); and
wherein a tip face (52) of the orbiting scroll wall (46) and/or a tip face (53) of the fixed scroll wall (49) and/or a base plate (51) of the orbiting scroll (45) and/or a base plate (50) of the fixed scroll (48) comprises a polymeric material, preferably wherein the polymeric material comprises PEEK or a polyimide, preferably with a PTFE lubricant additive.

9. The scroll pump according to any preceding claim, further comprising means (38;47) for biasing the orbiting scroll (23;45) towards the fixed scroll (24;48); preferably, wherein said means (38;47) for biasing the orbiting scroll (23;45) towards the fixed scroll (24;48) comprises at least one spring and/or at least one magnet.

10. The scroll pump according to any preceding claim, wherein a side face (36) of the orbiting scroll wall (27) comprises a polymeric material, preferably wherein the orbiting scroll wall is polymeric, preferably wherein the orbiting scroll is a unitary polymeric structure.

11. A method of calibrating a scroll pump comprising the steps of:
a) providing a scroll pump (21;40) comprising an orbiting scroll (23;45) and a fixed scroll (24;48), wherein the orbiting scroll (23;45) comprises an orbiting scroll wall (27;46) having at least one side face (36), and the fixed scroll (24;48) comprises a fixed scroll wall (29;49) having at least one side face (37), and wherein at least one side face (36) of the orbiting scroll wall (27;46) is substantially parallel to at least one side face (37) of the fixed scroll wall (29;49), and wherein the scroll pump further comprises a magnetic drive system;
b) imparting an orbiting motion to the orbiting scroll (23;45) about an orbital axis using the magnetic drive system; and, optionally,
c) varying the orbit of the orbiting scroll (23;45) while orbiting until a side face (36) of the orbiting scroll wall (27;46) engages a side face (37) of the fixed scroll wall (29;49);
the method being **characterised in that** a side face (36) of the orbiting scroll wall (27;46) and/or a side face (37) of the fixed scroll wall (29;49) comprises a polymeric material.

12. The method according to claim 11, further comprising the step of varying the orbit of the orbiting scroll (23;45) such that, while pumping, a side face (36) of the orbiting scroll wall (27;46) continually engages a side face (37) of the fixed scroll wall (29;49).

## Patentansprüche

1. Scrollpumpe (21; 40), umfassend eine umlaufende Spirale (23; 45) und eine feste Spirale (24; 48);
wobei die Scrollpumpe ferner ein magnetisches Antriebssystem umfasst, wobei das magnetische Antriebssystem eine statische magnetische Komponente (34; 41) und eine umlaufende Antriebskomponente (35; 42) umfasst; und
wobei die statische magnetische Komponente (34; 41) im Gebrauch auf die umlaufende Antriebskomponente (35; 42) eine Umlaufbewegung überträgt, sodass die umlaufende Antriebskomponente (35; 42) im Wesentlichen eine Umlaufachse umkreist; und
wobei die umlaufende Antriebskomponente (35; 42) so an die umlaufende Spirale (23; 45) gekoppelt ist, dass die umlaufende Spirale (23; 45) im Gebrauch im Wesentlichen eine Umlaufachse umkreist, wobei die umlaufende Spirale (23; 45) eine Wand (27; 46) der umlaufenden Spirale umfasst, die wenigstens eine Seitenfläche (36) aufweist, und die feste Spirale (24; 48) eine Wand (29; 49) der festen Spirale umfasst, die wenigstens eine Seitenfläche (37) aufweist; und
wobei eine Seitenfläche (36) der Wand (27; 46) der umlaufenden Spirale und eine Seitenfläche (37) der Wand (29; 49) der festen Spirale im Wesentlichen parallel sind; und
wobei die statische magnetische Komponente (34; 41) im Gebrauch eine Umlaufbewegung auf die umlaufende Antriebskomponente (35; 42) überträgt, sodass sich die Seitenfläche (36) der Wand (27; 46) der umlaufenden Spirale kontinuierlich verschiebbar im Eingriff mit der Seitenfläche (37) der Wand (29; 49) der festen Spirale befindet; und
**dadurch gekennzeichnet, dass**
eine Seitenfläche (36) der Wand (27; 46) der umlaufenden Spirale und/oder eine Seitenfläche (37) der Wand (29; 49) der festen Spirale ein Polymermaterial umfasst.

2. Scrollpumpe nach Anspruch 1, wobei die statische magnetische Komponente (34; 41) oder die umlaufende Antriebskomponente (35; 42) dazu konfiguriert ist, im Gebrauch ein variables Magnetfeld zu erzeugen, wobei das variable Magnetfeld im Gebrauch so gesteuert wird, dass es einen abdichtenden Eingriff zwischen der umlaufenden Spirale (23; 45) und der festen Spirale (24; 48) bereitstellt.

3. Scrollpumpe nach einem der vorhergehenden Ansprüche, wobei das Massezentrum eines umlaufenden Systems die umlaufende Spirale (23) umfasst und sich die umlaufende Antriebskomponente (35) in der Umlaufebene der umlaufenden Antriebskomponente (35) befindet.

4. Scrollpumpe nach einem der vorhergehenden Ansprüche, wobei die Scrollpumpe ferner eine durch die umlaufende Spirale (45) und die feste Spirale (48) definierte Pumpenkammer (42) umfasst, und
wobei die umlaufende Antriebskomponente (42) so angeordnet ist, dass im Gebrauch eine Umlaufebene der umlaufenden Antriebskomponente (42) durch die Pumpenkammer (42) verläuft, wobei das Massezentrum der umlaufenden Spirale (45) und der umlaufenden Antriebskomponente (42) optional im Wesentlichen in der Pumpenkammer (42) positioniert ist, vorzugsweise im Wesentlichen in der Umlaufebene der umlaufenden Antriebskomponente (44).

5. Scrollpumpe nach einem der vorhergehenden Ansprüche, wobei die umlaufende Antriebskomponente (44) an der umlaufenden Spirale (45) positioniert ist oder einen Teil davon bildet.

6. Scrollpumpe nach einem der von Ansprüche 1 bis 3, wobei die Scrollpumpe ferner eine durch die umlaufende Spirale (23) und die feste Spirale (24) definierte Pumpenkammer (33) umfasst, und
wobei die umlaufende Antriebskomponente (35) so angeordnet ist, dass im Gebrauch die Umlaufebene der umlaufenden Antriebskomponente (35) nicht durch die Pumpenkammer (33) verläuft.

7. Scrollpumpe nach einem der vorhergehenden Ansprüche, wobei eine Seitenfläche (36) der Wand (27) der umlaufenden Spirale oder eine Seitenfläche (37) der Wand (29) der festen Spirale ein Polymermaterial umfasst, und wobei eine Seitenfläche der anderen von der Wand der umlaufenden Spirale oder eine Seitenfläche der Wand der festen Spirale ein metallisches Material umfasst.

8. Scrollpumpe nach einem der vorhergehenden Ansprüche,
wobei sich im Gebrauch eine Spitzenfläche (52) der Wand (46) der umlaufenden Spirale im Eingriff mit einer Grundplatte (50) der festen Spirale (48) befindet, und/oder wobei sich eine Spitzenfläche (53) der Wand (49) der festen Spirale im Eingriff mit einer Grundplatte (51) der umlaufenden Spirale (45) befindet; und
wobei eine Spitzenfläche (52) der Wand (46) der umlaufenden Spirale und/oder eine Spitzenfläche (53) der Wand (49) der festen Spirale und/oder eine Grundplatte (51) der umlaufenden Spirale (45) und/oder eine Grundplatte (50) der festen Spirale (48) ein Polymermaterial umfasst, wobei das Polymermaterial vorzugsweise PEEK oder ein Polyimid, vorzugsweise mit einem PTFE-Schmiermitteladditiv, umfasst.

9. Scrollpumpe nach einem der vorhergehenden Ansprüche, ferner umfassend Mittel (38; 47) zum Vorspannen der umlaufenden Spirale (23; 45) in Richtung der festen Spirale (24; 48); wobei die Mittel (38; 47) zum Vorspannen der umlaufenden Spirale (23; 45) in Richtung der festen Spirale (24; 48) vorzugsweise mindestens eine Feder und/oder mindestens einen Magneten umfassen.

10. Scrollpumpe nach einem der vorhergehenden Ansprüche, wobei eine Seitenfläche (36) der Wand (27) der umlaufenden Spirale ein Polymermaterial umfasst, wobei die Wand der umlaufenden Spirale vorzugsweise polymer ist, wobei die umlaufende Spirale vorzugsweise eine einheitliche polymere Struktur ist.

11. Verfahren zum Kalibrieren einer Scrollpumpe, umfassend die folgenden Schritte:
a) Bereitstellen einer Scrollpumpe (21; 40), umfassend eine umlaufende Spirale (23; 45) und eine feste Spirale (24; 48), wobei die umlaufende Spirale (23; 45) eine Wand (27; 46) der umlaufenden Spirale umfasst, die wenigstens eine Seitenfläche (36) aufweist, und die feste Spirale (24; 48) eine Wand (29; 49) der festen Spirale umfasst, die wenigstens eine Seitenfläche (37) aufweist, und wobei wenigstens eine Seitenfläche (36) der Wand (27; 46) der umlaufenden Spirale im Wesentlichen parallel zu wenigstens einer Seitenfläche (37) der Wand (29; 49) der festen Spirale ist, und wobei die Scrollpumpe ferner ein magnetisches Antriebssystem umfasst;
b) Übertragen einer Umlaufbewegung auf die eine Umlaufachse umkreisende Spirale (23; 45) unter Verwendung des magnetischen Antriebssystems; und, optional,
c) Variieren des Umlaufens der umlaufenden Spirale (23; 45) während des Umlaufens, bis sich eine Seitenfläche (36) der Wand (27; 46) der umlaufenden Spirale im Eingriff mit einer Seitenfläche (37) der Wand (29; 49) der festen Spirale befindet;
wobei das Verfahren **dadurch gekennzeichnet ist, dass** eine Seitenfläche (36) der Wand (27; 46) der umlaufenden Spirale und/oder eine Seitenfläche (37) der Wand (29; 49) der festen Spirale ein Polymermaterial umfasst.

12. Verfahren nach Anspruch 11, ferner umfassend den Schritt des Variierens des Umlaufens der umlaufenden Spirale (23; 45), sodass sich während des Pumpens eine Seitenfläche (36) der Wand (27; 46) der umlaufenden Spirale kontinuierlich im Eingriff mit einer Seitenfläche (37) der Wand (29; 49) der festen Spirale befindet.

## Revendications

1. Pompe à spirales (21; 40) comprenant une spirale orbitante (23; 45) et une spirale fixe (24; 48); dans laquelle la pompe à spirales comprend en outre un système d'entraînement magnétique, le système d'entraînement magnétique comprenant un composant magnétique statique (34; 41) et un composant d'entraînement orbitant (35; 42); et
dans laquelle, pendant l'utilisation, le composant magnétique statique (34; 41) communique un mouvement orbitant au composant d'entraînement orbitant (35; 42) de sorte que le composant d'entraînement orbitant (35; 42) orbite sensiblement autour d'un axe orbital; et
dans laquelle le composant d'entraînement orbitant (35; 42) est couplé à la spirale orbitante (23; 45) de sorte que, pendant l'utilisation, la spirale orbitante (23; 45) orbite sensiblement autour d'un axe orbital,
dans laquelle la spirale orbitante (23; 45) comprend une paroi de spirale orbitante (27; 46) ayant au moins une face latérale (36), et la spirale fixe (24; 48) comprend une paroi de spirale fixe (29; 49) ayant au moins une face latérale (37); et
dans laquelle une face latérale (36) de la paroi de spirale orbitante (27; 46) et une face latérale (37) de la paroi de spirale fixe (29; 49) sont sensiblement parallèles; et
dans laquelle, pendant l'utilisation, le composant magnétique statique (34; 41) communique un mouvement orbitant au composant d'entraînement orbitant (35; 42) de sorte que la face latérale (36) de la paroi de spirale orbitante (27; 46) est continuellement en contact par glissement avec la face latérale (37) de la paroi de spirale fixe (29; 49); et
**caractérisée en ce que**
une face latérale (36) de la paroi de spirale orbitante (27; 46) et/ou une face latérale (37) de la paroi de spirale fixe (29; 49) comprend un matériau polymère.

2. Pompe à spirales selon la revendication 1, dans laquelle le composant magnétique statique (34; 41) ou le composant d'entraînement orbitant (35; 42) est configuré pour produire un champ magnétique variable pendant l'utilisation, dans laquelle le champ magnétique variable est régulé pendant l'utilisation pour assurer un contact étanche entre la spirale orbitante (23; 45) et la spirale fixe (24; 48).

3. Pompe à spirales selon l'une quelconque des revendications précédentes dans laquelle le centre de masse d'un système orbitant comprenant la spirale orbitante (23) et le composant d'entraînement orbitant (35) est situé dans le plan orbital du composant d'entraînement orbitant (35).

4. Pompe à spirales selon l'une quelconque des revendications précédentes, dans laquelle la pompe à spirales comprend en outre une chambre de pompe (42) définie par la spirale orbitante (45) et la spirale fixe (48), et
dans laquelle le composant d'entraînement orbitant (42) est agencé de telle sorte que, pendant l'utilisation, un plan orbital du composant d'entraînement orbitant (42) traverse ladite chambre de pompe (42), dans laquelle le centre de masse de la spirale orbitante (45) et du composant d'entraînement orbitant (42) est éventuellement positionné sensiblement à l'intérieur de la chambre de pompe (42), de préférence sensiblement à l'intérieur du plan orbital du composant d'entraînement orbitant (44).

5. Pompe à spirales selon l'une quelconque des revendications précédentes, dans laquelle le composant d'entraînement orbitant (44) est situé sur ou forme une partie de la spirale orbitante (45).

6. Pompe à spirales selon l'une quelconque des revendications 1 à 3, dans laquelle la pompe à spirales comprend en outre une chambre de pompe (33) définie par la spirale orbitante (23) et la spirale fixe (24), et
dans laquelle le composant d'entraînement orbitant (35) est agencé de telle sorte que, pendant l'utilisation, le plan orbital du composant d'entraînement orbitant (35) ne traverse pas la chambre de pompe (33).

7. Pompe à spirales selon l'une quelconque des revendications précédentes, dans laquelle une face latérale (36) de la paroi de spirale orbitante (27) ou une face latérale (37) de la paroi de spirale fixe (29) comprend un matériau polymère, et dans laquelle une face latérale de l'autre de la paroi de spirale orbitante ou une face latérale de la paroi de spirale fixe comprend un matériau métallique.

8. Pompe à spirales selon l'une quelconque des revendications précédentes,
dans laquelle, pendant l'utilisation, une face d'extrémité (52) de la paroi de spirale orbitante (46) est en contact avec une plaque de base (50) de la spirale fixe (48), et/ou dans laquelle une face d'extrémité (53) de la paroi de spirale fixe (49) est en contact avec une plaque de base (51) de la spirale orbitante (45); et
dans laquelle une face d'extrémité (52) de la paroi de la spirale orbitante (46) et/ou une face d'extrémité (53) de la paroi de la spirale fixe (49) et/ou une plaque de base (51) de la spirale orbitante (45) et/ou une plaque de base (50) de la spirale fixe (48) comprend un matériau polymère, de préférence dans laquelle le matériau polymère comprend du PEEK ou un polyimide, de préférence avec un additif lubrifiant PTFE.

9. Pompe à spirales selon l'une quelconque des revendications précédentes, comprenant en outre un moyen (38; 47) pour solliciter la spirale orbitante (23; 45) vers la spirale fixe (24; 48); de préférence, dans laquelle ledit moyen (38; 47) pour solliciter la spirale orbitante (23; 45) vers la spirale fixe (24; 48) comprend au moins un ressort et/ou au moins un aimant.

10. Pompe à spirales selon l'une quelconque des revendications précédentes, dans laquelle une face latérale (36) de la paroi de spirale orbitante (27) comprend un matériau polymère, de préférence dans laquelle la paroi de spirale orbitante est polymérique, de préférence dans laquelle la spirale orbitante est une structure polymérique unitaire.

11. Procédé d'étalonnage d'une pompe à spirales comprenant les étapes de:
a) fournir une pompe à spirales (21; 40) comprenant une spirale orbitante (23; 45) et une spirale fixe (24; 48), dans laquelle la spirale orbitante (23; 45) comprend une paroi de spirale orbitante (27; 46) ayant au moins une face latérale (36), et la spirale fixe (24; 48) comprend une paroi de spirale fixe (29; 49) ayant au moins une face latérale (37), et dans laquelle au moins une face latérale (36) de la paroi de spirale orbitante (27; 46) est sensiblement parallèle à au moins une face latérale (37) de la paroi de spirale fixe (29; 49), et dans laquelle la pompe à spirales comprend en outre un système d'entraînement magnétique;
b) imprimer un mouvement orbitant à la spirale orbitante (23; 45) autour d'un axe orbital au moyen du système d'entraînement magnétique; et, éventuellement,
c) faire varier l'orbite de la spirale orbitante (23; 45) tandis qu'elle orbite jusqu'à ce qu'une face latérale (36) de la paroi de spirale orbitante (27; 46) vienne en contact avec une face latérale (37) de la paroi de spirale fixe (29; 49);
le procédé étant **caractérisé en ce qu'**une face latérale (36) de la paroi de spirale orbitante (27; 46) et/ou une face latérale (37) de la paroi de spirale fixe (29; 49) comprend un matériau polymère.

12. Procédé selon la revendication 11, comprenant en outre l'étape de faire varier l'orbite de la spirale orbitante (23; 45) de sorte que, pendant le pompage, une face latérale (36) de la paroi de spirale orbitante (27; 46) est continuellement en contact avec une face latérale (37) de la paroi de spirale fixe (29; 49).
